# EUROPEAN PATENT APPLICATION

(11) **EP 4 844 914 A1**
(43) Date of publication of application: **25.11.2026**
(21) Application number: 26173343.0
(22) Date of filing: 20.04.2026
(51) Int. Cl.: H01M 50/209, H01M 50/269, H01M 50/507

(54) **BUSBAR HOLDER AND BATTERY MODULE INCLUDING THE SAME**

(30) Priority: 20.05.2025 KR 20250065046
(71) Applicant: SAMSUNG SDI CO., LTD., Yongin-si, Gyeonggi-do 17084 (KR)
(72) Inventor: HAN, Kyuyul, 17084 Yongin-Si (KR)
(74) Representative: Regimbeau

(57) **Abstract**

A busbar holder, including a first plate, and a second plate coupled to the first plate in a first direction, wherein the first direction is a longitudinal direction of the first plate and the second plate, the first plate includes a pair of first guide portions respectively at opposite edges of the first plate along a second direction perpendicular to the first direction, the first guide portions extending in the first direction, the second plate comprises a pair of second guide portions respectively coupled to the pair of first guide portions, the pair of second guide portions extending in the first direction, and an overall length of the busbar holder is adjustable through relative movement between the first plate and the second plate.

## Description

### FIELD

The disclosure relates to a busbar holder and a battery module including the same.

### TECHNICAL BACKGROUND

Unlike primary batteries, which are not rechargeable, secondary batteries can be charged and discharged, and are gaining attention due to their very low self-discharge rate and high energy density. Recently, secondary batteries have been widely used not only in compact devices such as portable electronic devices, but also in medium- and large-sized devices such as electric vehicles (EVs), including plug-in electric vehicles (PEVs) and plug-in hybrid electric vehicles (PHEVs), and energy storage systems (ESSs) that operate based on electric power sources.

The operating voltage of a unit secondary battery cell, i.e., a unit battery cell, is typically about 2.5 V to 4.5 V. Therefore, when a higher output voltage is required, a battery pack is formed by connecting multiple battery cells in series. Additionally, a battery pack is configured by connecting multiple battery cells in parallel according to the charge/discharge capacity required for the battery pack. Thus, the number of battery cells included in a battery pack may be variously set according to the required output voltage or charge/discharge capacity.

The above-described information disclosed in the background technology of this disclosure is only intended to improve understanding of the background of the disclosure and therefore may include information that does not constitute prior art.

According to the invention, there is provided a busbar holder as defined in appended claim 1 and a battery module including the same. Non-limiting, additional features are defined in the corresponding dependent claims.

According to an aspect of the present disclosure, there is provided a busbar holder, including a first plate, and a second plate coupled to the first plate in a first direction, wherein the first direction is a longitudinal direction of the first plate and the second plate, the first plate includes a pair of first guide portions respectively at opposite edges of the first plate along a second direction perpendicular to the first direction, the first guide portions extending in the first direction, the second plate comprises a pair of second guide portions respectively coupled to the pair of first guide portions, the pair of second guide portions extending in the first direction, and an overall length of the busbar holder is adjustable through relative movement between the first plate and the second plate.

The second plate may have a same shape as the first plate rotated by 180 degrees about a center of the first plate.

Each of the pair of first guide portions may include a guide rail, and the pair of second guide portions may each include a guide groove in which is the guide rail.

The guide groove may have a length shorter than a length of the guide rail.

The guide rail may include an extension portion having an increased width at an end thereof.

The extension portion may protrude in a third direction perpendicular to the first direction, and the guide groove may further include a cover portion bent to cover an upper surface of the extension portion.

Each of the pair of first guide portions may include at least one protrusion having a convex end, and each of the pair of second guide portions may include at least one protrusion hole, spaced apart from one another, in which is the at least one protrusion.

The first plate may include a plurality of first openings on which busbars configured to electrically connect a plurality of battery cells are seated, the second plate may include a plurality of second openings on which the busbars are seated, and at least some of the plurality of first openings may overlap with the plurality of second openings.

The first plate may include first vent holes overlapping with vent portions of a plurality of battery cells, the second plate may include second vent holes overlapping with the vent portions of the plurality of battery cells, and at least some of the first vent holes overlap with the second vent holes.

According to another aspect of the present disclosure, there is provided a battery module, including a plurality of battery cells, busbars configured to electrically connect the plurality of battery cells, and a busbar holder on the plurality of battery cells, the busbar holder having the busbars seated thereon, wherein the busbar holder includes a first plate and a second plate coupled to the first plate in a first direction, the first plate includes a pair of first guide portions respectively at opposite edges of the first plate along a second direction perpendicular to the first direction and extending in the first direction, the second plate includes a pair of second guide portions extending in the first direction and respectively coupled to the first guide portions, and an overlapping region between the first plate and the second plate is changeable by relative movement between the first plate and the second plate.

The second plate may have a same shape as the first plate rotated 180 degrees about a center of the first plate.

Each of the pair of first guide portions may include a guide rail, and each of the pair of second guide portions may include a guide groove in which is the guide rail.

The guide groove may have a length shorter than a length of the guide rail.

The guide rail may include an extension portion having an increased width at an end thereof.

The extension portion may protrude in a third direction perpendicular to the first direction, and the guide groove may further include a cover portion bent to cover an upper surface of the extension portion.

Each of the pair of first guide portions may include at least one protrusion having a convex end, and each of the pair of second guide portions may include at least one protrusion hole, spaced apart from one another, in which is the at least one protrusion.

The first plate may include a plurality of first openings on which the busbars are seated, the second plate may include a plurality of second openings on which the busbars are seated, and at least some of the plurality of first openings may overlap with the plurality of second openings.

The first plate may include first vent holes overlapping with vent portions of the plurality of battery cells, the second plate may include second vent holes overlapping with the vent portions of the plurality of battery cells, and at least some of the plurality of first vent holes may overlap with the second vent holes.

The battery module may further include an adhesive member between the first plate and the second plate in the overlapping region between the first plate and the second plate.

The battery module may further include a pair of end plates facing broad surfaces of the battery cells and located at opposite ends of the plurality of battery cells, a pair of side plates connected to the pair of end plates, each of the pair of end plates being at each side surface of the plurality of battery cells, and a bottom plate between the pair of side plates, the bottom plate facing lower portions of the plurality of battery cells.

However, the objects of the disclosure are not limited to the object mentioned above, and other objects that are not mentioned can be clearly understood by those skilled in the art from the following description of the disclosure.

### BRIEF DESCRIPTION OF THE DRAWINGS

Features will become apparent to those of ordinary skill in the art by describing in detail exemplary embodiments with reference to the attached drawings, in which:
FIG. 1 is an exploded perspective view schematically illustrating a battery module according to an embodiment of the disclosure;
FIG. 2 is a perspective view schematically illustrating an example of a battery cell;
FIG. 3 is a schematic cross-sectional view taken along line I-I' of FIG. 2;
FIGS. 4 and 5 are plan views schematically illustrating an example of the busbar holder of FIG. 1;
FIG. 6 is a cross-sectional view schematically illustrating one example of the cross-section taken along line II-II' of FIG. 5;
FIG. 7 is a cross-sectional view schematically illustrating another example of the cross-section taken along line II-II' of FIG. 5; and
FIG. 8 is a cross-sectional view schematically illustrating yet another example of the cross-section taken along line II-II' of FIG. 5.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, preferred embodiments of the disclosure will be described in detail with reference to the attached drawings. Prior to the description, it should be understood that the terms used in the specification and the appended claims should not be construed as being limited to general and dictionary meanings, but interpreted based on the meanings and concepts corresponding to technical aspects of the disclosure on the basis of the principle that the inventor is allowed to define terms appropriately for the best explanation. Therefore, the description proposed herein is merely a preferable example for the purpose of illustrations only, not intended to limit the scope of the disclosure, so it should be understood that other equivalents and modifications could be made thereto without departing from the scope of the disclosure.

It will be further understood that the terms "includes," "comprises," and/or "comprising," "including," when used in this specification, specify the presence of stated features, integers, steps, operations, elements, components and/or groups thereof but do not preclude the presence or addition of one or more other features, integers, steps, operations, elements, components, and/or groups thereof.

Further, the use of "may" when describing embodiments of the disclosure relates to "one or more embodiments of the disclosure."

Additionally, in the accompanying drawings, for purposes of illustration and to facilitate understanding of the disclosure, the dimensions of certain components may be exaggerated and are not necessarily drawn to scale. Additionally, like reference numerals may designate like components in different embodiments.

References to two compared elements as being "the same," may mean that they are "substantially the same." Thus, the phrase "substantially the same" may include deviations that are considered low in the art, for example, deviations of 5% or less. In addition, when a certain parameter is referred to as being uniform in a given region, it may mean that it is uniform in terms of an average.

It will be understood that, although the terms "first," "second," etc. may be used herein to describe various components, these components are not limited by these terms. These terms are only used to distinguish one component from another, and unless otherwise stated, a first component may also be termed a second component.

Throughout the specification, unless otherwise specifically stated, each element may be singular or provided in plural.

When an arbitrary element is referred to as being disposed (or located or positioned) "above" (or "below") or "on" (or "under") a component, it may mean that the arbitrary element is placed in contact with the upper (or lower) surface of the component and may also mean that another component may be interposed between the component and any arbitrary element disposed (or located or positioned) on (or under) the component.

In addition, it will be understood that, when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. Also, when a part is referred to as being "electrically coupled" to another part, the part can be directly connected to another part or an intervening part may be present therebetween such that the part and another part are indirectly connected to each other.

Throughout the specification, the expression "A and/or B" shall be understood to mean A, B, or both A and B, unless otherwise explicitly stated. That is, "and/or" encompasses any and all combinations of the listed elements. The expression "C to D" shall be understood to mean a range from C to D inclusive, unless otherwise specified.

Throughout the specification, a first direction x refers to the arrangement direction of a plurality of battery cells, a second direction y refers to a direction perpendicular to the arrangement direction of the plurality of battery cells, and a third direction z refers to the height of the plurality of battery cells.

The terminology used herein is for the purpose of describing embodiments of the disclosure only and is not intended to be limiting of the disclosure.

Hereinafter, embodiments of the disclosure will be described in detail with reference to the attached drawings. In the drawings, the same or corresponding components are denoted by the same reference numerals.

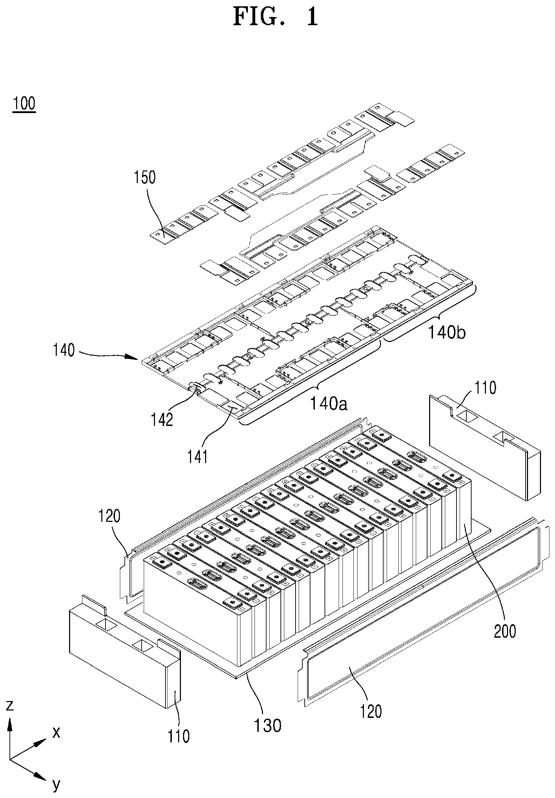

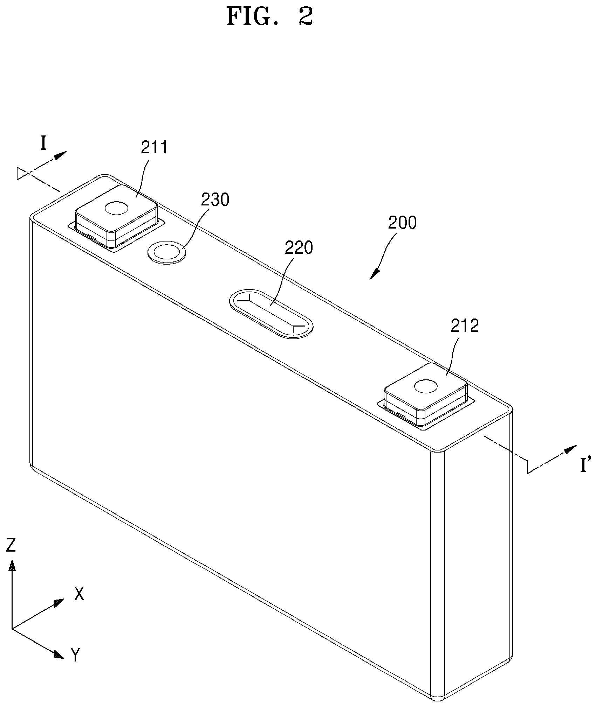

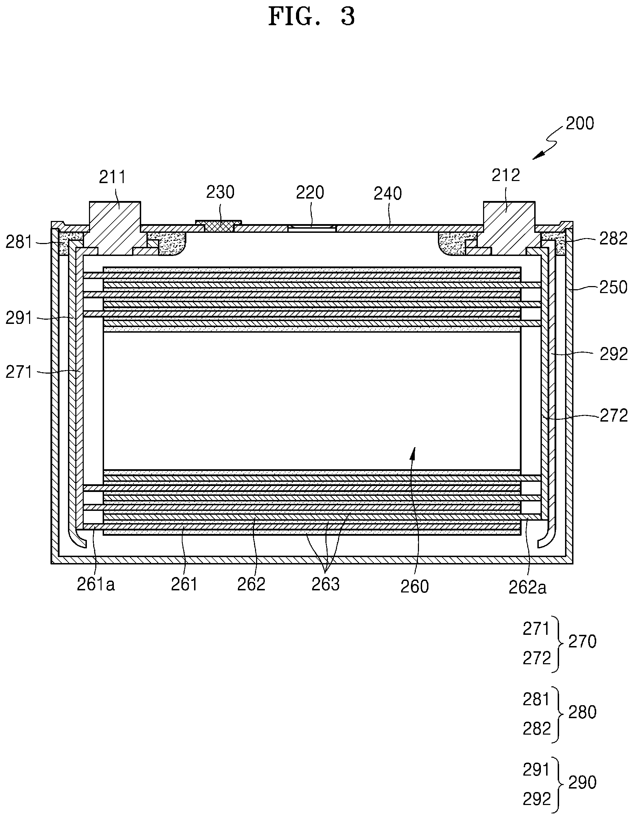

FIG. 1 is an exploded perspective view of a battery module 100, FIG. 2 is a perspective view schematically illustrating an example of a single battery cell, and FIG. 3 is a schematic cross-sectional view taken along line I-I' of FIG. 2.

First, referring to FIG. 1, the battery module 100 according to an embodiment of the disclosure may include a plurality of battery cells 200 arranged along the first direction x, busbars 150 configured to electrically connect the plurality of battery cells, a busbar holder 140 located on the plurality of battery cells and having the busbars 150 seated thereon, a pair of end plates 110 facing broad surfaces of the battery cells and located at opposite ends of the plurality of battery cells, a pair of side plates 120 connected to the pair of end plates 110 and each located at each side surface of the plurality of battery cells, and a bottom plate 130 located between the pair of side plates 120 and facing lower portions of the plurality of battery cells.

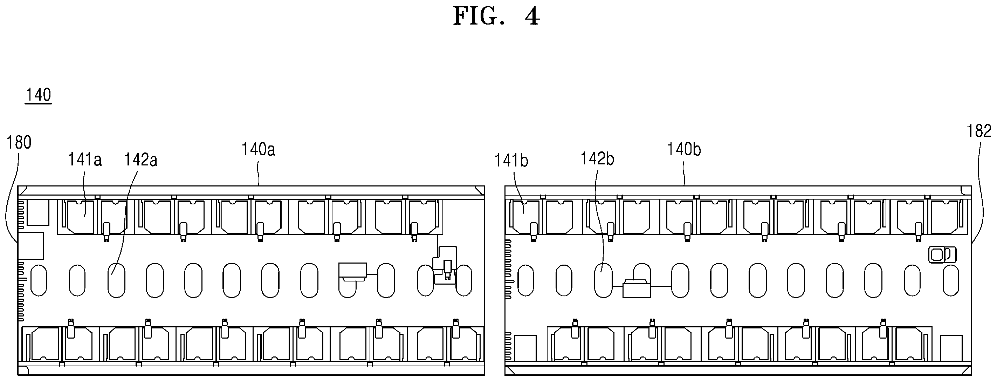

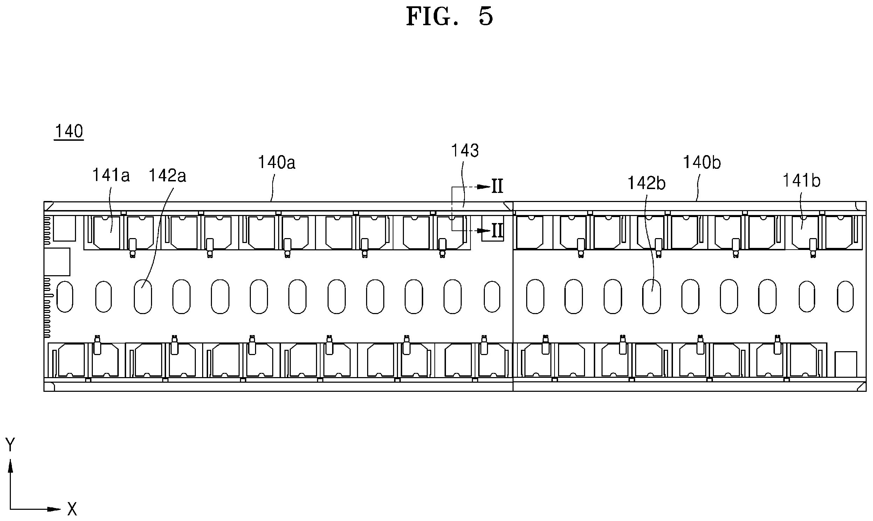

The battery cell may be arranged in plurality in the battery module 100 and may be electrically connected to one another via the busbars 150. The busbar holder 140 of FIG. 1 may be replaced with the two busbar holders of FIG. 4 or FIG. 5. As shown in FIG. 1, each of the plurality of battery cells 200 may be a prismatic cell having a thin parallelepiped or flat plate shape, and may be arranged in plurality along the length direction (x-axis direction in FIG. 1) of the battery module 100. Each of the plurality of battery cells 200 may include one or more electrode portions on its upper side and may be electrically connected to other battery cells via the busbars 150. Each of the plurality of battery cells 200 may have two electrodes of different polarities on its upper surface.

FIG. 1 illustrates prismatic battery cells, but the plurality of battery cells 200 may have various shapes, such as a cylindrical shape, a can shape, or a pouch shape. Additionally, the number of the plurality of battery cells 200 may be appropriately selected according to the capacity of the battery module 100.

The busbars 150 are arranged on one side of the plurality of battery cells 200 and electrically connect the plurality of battery cells 200 to each other. As shown in FIG. 1, the busbars 150 may be located on an upper portion of the battery module 100 to connect at least two electrode terminals of adjacent battery cells to each other. The busbars 150 may include a conductive material such as metal and may come into contact with electrode terminal portions exposed through openings of the busbar holder 140.

The busbar holder 140 may be coupled to the plurality of battery cells 200 and the pair of side plates 120 through coupling members.

The busbar holder 140 may be located on the plurality of battery cells 200 and accommodate the busbars 150. Additionally, the busbar holder 140 may include a sensing unit configured to perform various protective functions to improve the stability of the battery module 100. For example, the sensing unit may be connected to a battery management system (BMS).

For example, each of the busbars 150 may be provided with a terminal for temperature measurement and/or a terminal for voltage measurement, and the measured information may be transmitted to the sensing unit through wiring for integrated management.

The busbar holder 140 may include openings 141 and vent holes 142. The openings 141 include first openings 141a of a first plate 140a and second openings 141b of a second plate 140b (see FIG. 4). The first openings 141a and the second openings 141b have shapes corresponding to the electrodes and expose the electrodes to the outside when the busbar holder 140 is mounted on the battery module 100. A connection portion of the busbar 150 may be located above the opening so that it can come into contact with the electrode.

The vent holes 142 include first vent holes 142a of the first plate 140a and second vent holes 142b of the second plate 140b. At least one of the first plate 140a and the second plate 140b may be moveable with respect to the other one along the x-axis. The vent holes 142 may serve as discharge passages for high-temperature gas released through vents 220 when the temperature of the plurality of battery cells 200 rises and the high-temperature gas is discharged.

The pair of end plates 110 may each be arranged at one side (e.g., opposite sides) of the battery module 100 to protect the plurality of battery cells 200 from external impact and foreign substances, and form a frame of the battery module 100 together with the pair of side plates 120. As shown in FIG. 1, the end plates 110 may be respectively arranged at opposite ends of the battery module 100 in the length direction (x-axis direction of FIG. 1) and may be connected to both ends of the pair of side plates 120.

The pair of side plates 120 may each be located on a side of the battery module 100 to protect the plurality of battery cells 200 from external impact and foreign substances and may form a frame of the battery module 100. As shown in FIG. 1, one of the pair of side plates 120 may be located on each of the side surfaces of the battery module 100 to cover the plurality of battery cells 200.

The pair of side plates 120 may include protruding portions at both ends in the length direction (x-axis direction in FIG. 1), which may be connected to the end plates 110. The protruding portions of the pair of side plates 120 may be connected to the end plates 110 by laser welding, bolts, adhesives, or the like.

The pair of end plates 110, the pair of side plates 120, and the bottom plate 130 may be fastened together using members such as bolts, but any fastening method may be used as long as it enables fastening.

FIG. 2 is a perspective view schematically illustrating an example of a battery cell, and FIG. 3 is a schematic cross-sectional view taken along line I-I' of FIG. 2.

Referring to FIGS. 2 and 3, a battery cell 200 may include at least one of an electrode assembly 260 formed by winding a positive electrode 261, a negative electrode 262, and a separator 263, as an insulator, interposed between the positive electrode 261 and the negative electrode 262, a case 250 in which the electrode assembly 260 is housed, and a cap plate 240 configured to cover an opening of the case 250.

The electrode assembly 260 may be formed in a structure in which a plurality of sheets of the positive electrodes 261 and the negative electrodes 262 are alternately stacked with the separator 263 interposed between them.

The positive electrode 261 and the negative electrode 262 may each include a coated portion which may be a region coated with an active material on a current collector formed of a thin metal foil and may respectively include plain portions 261a and 262a which may be regions not coated with an active material.

The case 250 may define the overall exterior of the battery cell 200 and may include a conductive metal such as aluminum, aluminum alloy, or nickel-plated steel. Additionally, the case 250 may provide a space in which the electrode assembly 260 is accommodated.

The case 250 and the cap plate 240 may each include a conductive material. Here, a first terminal 211 and a second terminal 212, electrically connected respectively to the positive electrode 261 and the negative electrode 262, may be installed to pass through the cap plate 240 and protrude to an outer side.

In addition, the outer peripheral surfaces of upper columns of the first terminal 211 and the second terminal 212 that may protrude outward from the cap plate 240 may be threaded and fixed to the cap plate 240 by a nut. However, the first terminal 211 and the second terminal 212 may have a rivet structure and be riveted or welded to the cap plate 240.

In addition, the cap plate 240 may be a thin plate and may be coupled to the opening of the case 250. The cap plate 240 may include an electrolyte injection port 230 into which a sealing stopper may be installed, and the vent 220 having a notch formed therein.

An insulating member 280 may be installed between the electrode assembly 260 and the cap plate 240. Here, the insulating member 280 may include a first insulating member 281 and a second insulating member 282, and each of the first and second insulating members 281 and 282 may be installed between the electrode assembly 260 and the cap plate 240.

Additionally, one end of a separating member 290, which may be installed to face one side surface of the electrode assembly 260, may be installed between the insulating member 280 and the first and second terminals 211 and 212.

Here, the separating member 290 may include a first separating member 291 and a second separating member 292.

Accordingly, one ends of first and second separating members 291 and 292, which may be installed to face opposite side surfaces of the electrode assembly 260, may be installed between the first and second insulating members 281 and 282 and the first and second terminals 211 and 212.

As a result, the first terminal 211 and the second terminal 212, which are respectively coupled by welding to positive and negative current collectors 271 and 272, may be connected to one ends of the first and second insulating members 281 and 282 and the first and second separating members 291 and 292.

The battery cell 200 is described as being a prismatic cell as an example. However, the disclosure may be applied to various types of battery cells, such as a pouch-shaped battery cell or a cylindrical battery cell.

Referring to FIGS. 2 and 3, each of the plurality of battery cells 200 may include a first terminal 211 and a second terminal 212, which are electrically connected via the busbars 150 to one side (e.g., each terminal side) of the plurality of battery cells 200, and the plurality of battery cells 200 may further include a vent 220 for discharging gas or the like generated inside the plurality of battery cells 200.

The first terminal 211 may be either a positive terminal or a negative terminal. When the first terminal 211 is a positive terminal, the second terminal 212 may be a negative terminal, and conversely, when the first terminal 211 is a negative terminal, the second terminal 212 may be a positive terminal. That is, the first terminal 211 and the second terminal 212 are formed to have different electrical polarities.

The first terminal 211 of one of the plurality of battery cells 200 may be electrically connected via the busbar 150 to a second terminal 212 of an adjacent battery cell of the plurality of battery cells 200, and the second terminal 212 of the same battery cell 200 may be electrically connected via another busbar 150 to the first terminal 211 of another adjacent of the plurality of battery cells 200. Although the plurality of battery cells 200 may be connected in series, various connection structures may be adopted as needed. Additionally, the number and arrangement of the plurality of battery cells 200 may be varied as needed.

The first terminal 211 and the second terminal 212 may be electrically connected to the current collector 270, which includes first and second current collectors 271 and 272 (hereinafter, referred to as positive and negative current collectors, respectively) bonded by welding to a positive plain portion 261a or a negative plain portion 262a.

For example, the first terminal 211 and the second terminal 212 may be joined to the positive and negative current collectors 271 and 272 by welding. However, the first and second terminals 211 and 212 and the positive and negative current collectors 271 and 272 may be formed by being integrally coupled to each other.

Each of the plurality of battery cells 200 may include the vent 220 at the upper portion, serving as a gas discharge passage, and the busbar holder 140 may further include openings 141 that overlap with the vents 220. The vent holes 142 may serve as discharge passages for high-temperature gas released through the vents 220 when the temperature of the plurality of battery cells 200 rises and the high-temperature gas is discharged.

FIGS. 4 and 5 are plan views schematically illustrating an example of the busbar holder 140 of FIG. 1.

Referring to FIGS. 4 and 5, the busbar holder 140 according to an embodiment of the disclosure may include the first plate 140a and the second plate 140b coupled to the first plate 140a.

The first plate 140a and the second plate 140b have a flat rectangular shape and are arranged on the plurality of battery cells 200 to support the plurality of busbars 150. The first plate 140a may be coupled to the second plate 140b to extend in length in the first direction x, and the length of the busbar holder 140 formed by coupling the first plate 140a and the second plate 140b may exceed one time and be less than two times that of a conventional busbar holder. An overall length of the busbar holder 140 may be a combined length in the first direction x from edge to opposite edge of the busbar holder 140. For example, referring to FIG. 4, the overall length of the busbar holder 140 may be along the first direction x between an edge 180 of the first plate 140a and a farthest edge 182 of the second plate 140b. In this case, the busbar holder 140 according to the disclosure may improve the design and manufacturing efficiency of the battery module by varying the length of the busbar holder 140, even when the number of battery cells stacked in the battery module changes. Here, the length refers to a dimension formed in the arrangement direction of the plurality of battery cells 200 (for example, the x-axis direction in FIG. 1).

The lower surface of the second plate 140b may be arranged to face the upper surfaces of the plurality of battery cells 200. A portion of the lower surface of the first plate 140a may be arranged to face the upper surfaces of the plurality of battery cells 200, but another portion of the lower surface of the first plate 140a may be arranged to face a portion of the upper surface of the second plate 140b as the first plate 140a is coupled to the second plate 140b.

The first plate 140a includes a plurality of first openings 141a on which the busbars 150 configured to electrically connect the plurality of battery cells are seated, and the second plate 140b includes a plurality of second openings 141b on which the busbars 150 are seated. The first openings 141a and the second openings 141b have shapes corresponding to the electrodes and expose the electrodes to the outside when the busbar holder 140 is mounted on the battery module 100. A connection portion of the busbar 150 may be located above the opening so that it can come into contact with the electrode. The first openings 141a and the second openings 141b may be arranged along the first direction x.

Further, the first plate 140a includes the first vent holes 142a that overlap with vent portions of the plurality of battery cells, and the second plate 140b includes the second vent holes 142b that overlap with the vent portions of the plurality of battery cells. The vent holes 142 may serve as discharge passages for high-temperature gas released through the vents 220 when the temperature of the plurality of battery cells 200 rises and the high-temperature gas is discharged. The first vent holes 142a, positioned between the first openings 141a, and the second vent holes 142b, positioned between the second openings 141b, may be arranged along the first direction x.

Since the second plate 140b has the same shape as a shape obtained by rotating the first plate 140a 180 degrees about the center of the first plate 140a (e.g., mirror images of one another, absent length), as shown in FIG. 4, at least some of the plurality of first openings 141a may overlap with the second openings 141b, while at least some of the plurality of first vent holes 142a may overlap with the second vent holes 142b, as shown in FIG. 5, even when the first plate 140a is coupled to the second plate 140b.

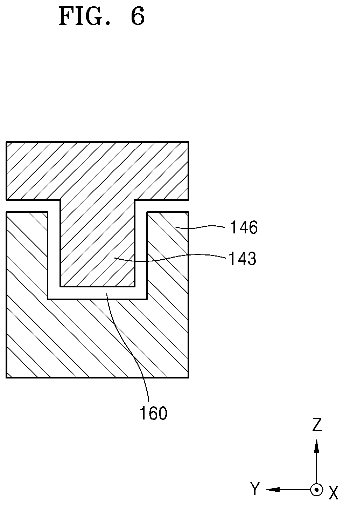

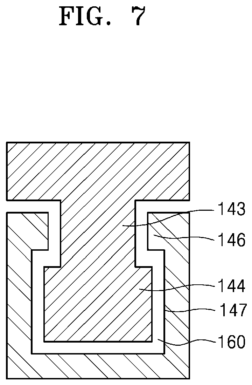

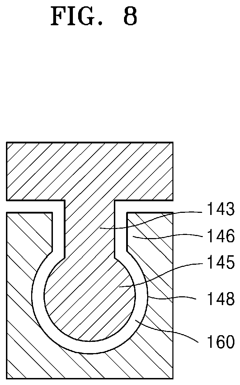

FIG. 6 is a cross-sectional view schematically illustrating an example of a cross-section taken along line II-II' of FIG. 5, FIG. 7 is a cross-sectional view schematically illustrating another example of the cross-section taken along line II-II' of FIG. 5, and FIG. 8 is a cross-sectional view schematically illustrating yet another example of the cross-section taken along line II-II' of FIG. 5.

Referring to FIGS. 6 to 8, the first plate 140a may include a pair of first guide portions 143 respectively located at opposite edges of the first plate 140a along the second direction y perpendicular to the first direction x and extending in the first direction x. In addition, the second plate 140b may include a pair of second guide portions 146 respectively coupled to the first guide portions 143 extending in the first direction x. The overlapping region between the first plate 140a and the second plate 140b is changed by relative movement between the first plate 140a and the second plate 140b, thereby allowing the overall length of the busbar holder 140 to be adjusted according to the number of stacked battery cells.

The first guide portions 143 are coupled to the second guide portions 146 at appropriate positions corresponding to the number of stacked battery cells. Accordingly, the overall length of the busbar holder 140 can be increased or decreased by the relative movement between the first plate 140a and the second plate 140b, thereby allowing the busbar holder 140 to accommodate changes in the number of stacked battery cells without requiring design changes.

The first guide portions 143 may each include a guide rail, and the second guide portions 146 may each include a guide groove. The guide rail of the first plate 140a may be inserted into the guide groove of the second plate 140b, such that the first plate 140a and the second plate 140b can be fastened to each other. In this case, the length of the guide groove may be shorter than that of the guide rail, thereby preventing the first plate 140a and the second plate 140b from completely overlapping each other.

The guide rail of the first plate 140a may include an extension portion 144 having an increased width at an end, and the extension portion 144 may protrude in the third direction z perpendicular to the first direction x. In this case, the guide groove may further include a cover portion 147 that is bent to cover an upper surface of the extension portion 144. By engagement between the extension portion 144 and the cover portion 147, the coupling force of the first plate 140a to the second plate 140b may be increased, and detachment of the first plate 140a may be prevented even in response to external impact on the battery module 100.

In addition, the first guide portions 143 may each include at least one protrusion 145 having a convex end, and in this case, the second guide portions 146 may each include at least one protrusion hole 148, spaced apart from one another, into which the at least one protrusion 145 is inserted. By engagement between the at least one protrusion 145 and the at least one protrusion hole 148, the coupling force of the first plate 140a to the second plate 140b may be increased, and detachment of the first plate 140a may be prevented even in response to external impact on the battery module 100.

The battery module 100 according to another embodiment of the disclosure may further include an adhesive member 160 between the first plate 140a and the second plate 140b in the overlapping region between the first plate 140a and the second plate 140b. The adhesive member 160 may be applied in advance to the first guide portions 143 or to the second guide portions 146 before the first plate 140a and the second plate 140b are coupled to each other. The adhesive member 160 may be an adhesive, a bond, or a double-sided tape, but this may vary.

While the disclosure has been hereinabove described with regard to a limited number of embodiments and drawings, a variety of modifications and changes may be made thereto within the scope of the appended claims.

The busbar holder according to the disclosure may improve the design and manufacturing efficiency of a battery module by varying the length of the busbar holder, even when the number of cells stacked in the battery module changes. That is, according to embodiments, a busbar holder includes two plates moveable relative to each other to adjust an overall combined length of the two plates, in accordance with the number of stacked cells.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the appended claims.

## Claims

1. A busbar holder (140), comprising:
a first plate (140a); and
a second plate (140b) coupled to the first plate in a first direction (x), wherein:
the first direction is a longitudinal direction of the first plate and the second plate,
the first plate comprises a pair of first guide portions (143) respectively at opposite edges of the first plate along a second direction (y) perpendicular to the first direction, the first guide portions extending in the first direction,
the second plate comprises a pair of second guide portions (146) respectively coupled to the pair of first guide portions, the pair of second guide portions extending in the first direction, and
an overall length of the busbar holder is adjustable through relative movement between the first plate and the second plate.

2. The busbar holder (140) as claimed in claim 1, wherein the second plate (140b) has a same shape as the first plate (140a) rotated by 180 degrees about a center of the first plate.

3. The busbar holder (140) as claimed in claim 1 or claim 2, wherein:
each of the pair of first guide portions (143) comprises a guide rail, and
the pair of second guide portions (146) each comprise a guide groove in which is the guide rail.

4. The busbar holder (140) as claimed in claim 3, wherein the guide groove has a length shorter than a length of the guide rail.

5. The busbar holder (140) as claimed in claim 3 or claim 4, wherein the guide rail comprises an extension portion (144) having an increased width at an end thereof.

6. The busbar holder (140) as claimed in claim 5, wherein:
the extension portion (144) protrudes in a third direction (z) perpendicular to the first direction (x), and
the guide groove further comprises a cover portion (147) bent to cover an upper surface of the extension portion.

7. The busbar holder (140) as claimed in any one of claims 1 to 6, wherein:
each of the pair of first guide portions (143) comprises at least one protrusion (145) having a convex end, and
each of the pair of second guide portions (146) comprises at least one protrusion hole (148), spaced apart from one another, in which is the at least one protrusion.

8. The busbar holder (140) as claimed in any one of claims 1 to 7, wherein:
the first plate (140a) comprises a plurality of first openings (141a) on which busbars (150) configured to electrically connect a plurality of battery cells (200) are seated,
the second plate (140b) comprises a plurality of second openings (141b) on which the busbars are seated, and
at least some of the plurality of first openings overlap with the plurality of second openings.

9. The busbar holder (140) as claimed in any one of claims 1 to 8, wherein:
the first plate (140a) comprises first vent holes (142a) overlapping with vent portions (220) of a plurality of battery cells (200),
the second plate (140b) comprises second vent holes (142b) overlapping with the vent portions of the plurality of battery cells, and
at least some of the first vent holes overlap with the second vent holes.

10. The busbar holder (140) as claimed in any one of claims 1 to 9, wherein the first plate (140a) is coupled to the second plate (140b) to extend in length of the busbar holder in the first direction (x).

11. The busbar holder (140) as claimed in any one of claims 1 to 10, wherein a portion of a surface of the first plate (140a) is arranged to face the plurality of battery cells (200), while another portion of the surface of the first plate is arranged to face a portion of the second plate (140b).

12. A battery module (100), comprising:
a plurality of battery cells (200);
busbars (150) configured to electrically connect the plurality of battery cells; and
the busbar holder (140) as claimed in any one of claims 1 to 11, on the plurality of battery cells, the busbar holder having the busbars seated thereon,
wherein an overlapping region between the first plate (140a) and the second plate (140b) is changeable by the relative movement between the first plate and the second plate.

13. The battery module (100) as claimed in claim 12, wherein:
the busbars (150) are seated on the plurality of first openings (141a) of the first plate (140a),
the busbars are seated on the plurality of second openings (141b) of the second plate (140b), and
at least some of the plurality of first openings overlap with the plurality of second openings.

14. The battery module (100) as claimed in claim 12 or claim 13, further comprising an adhesive member (160) between the first plate (140a) and the second plate (140b) in the overlapping region between the first plate and the second plate.

15. The battery module (100) as claimed in any one of claims 12 to 14, further comprising:
a pair of end plates (110) facing broad surfaces of the battery cells (200) and located at opposite ends of the plurality of battery cells;
a pair of side plates (120) connected to the pair of end plates, each of the pair of end plates being at each side surface of the plurality of battery cells; and
a bottom plate (130) between the pair of side plates, the bottom plate facing lower portions of the plurality of battery cells.
